# EUROPÄISCHE PATENTSCHRIFT

(11) **EP 1 440 257 B1**
(45) Veröffentlichungstag und Bekanntmachung des Hinweises auf die Patenterteilung: **26.03.2008**
(21) Anmeldenummer: 02754997.1
(22) Anmeldetag: 16.08.2002
(51) Int. Cl.: F16H 61/00

(54) **VERFAHREN ZUR SCHLUPFREGELUNG**
SLIP REGULATING METHOD
PROCEDE DE REGULATION ANTIPATINAGE

(30) Priorität: 02.11.2001 DE 10154059
(43) Veröffentlichungstag der Anmeldung: 28.07.2004
(73) Patentinhaber: AUDI AG, 85045 Ingolstadt (DE)
(72) Erfinder: MÄRKL, Johann, 85128 Nassenfels (DE)
(74) Vertreter: Thielmann, Frank
(86) Internationale Anmeldenummer: PCT/EP2002/009150
(87) Internationale Veröffentlichungsnummer: WO 2003/038313

(56) Entgegenhaltungen:
- EP-A- 1 070 868
- EP-A- 1 070 885
- DE-A- 10 162 195

## Beschreibung

Die Erfindung betrifft ein Verfahren zur Schlupfregelung eines Übertragungsmittels in einem stufenlosen Getriebe, insbesondere einem Umschlingungsmittelgetriebe in einem Kraftfahrzeug, gemäß dem Oberbegriff des Patentanspruches 1.

Ein derartiges Verfahren zur Schlupfregelung beschreibt die DE 197 12 451 A1 anhand eines Umschlingungsmittelgetriebes für Kraftfahrzeuge mit einer Kette oder einem Schubgliederband als Übertragungsmittel.

Ausgehend von einer schlupfgeregelten Vorspannungssteuerung des Übertragungsmittels werden als weitere Eingriffmöglichkeiten zur Schlupfregelung
- die Leistungsabgabe des Antriebsmotors;
- eine zusätzliche Anpassung der Getriebeübersetzung; und
- eine Anpressdrucksteuerung einer das Antriebsmoment vom Motor auf das Getriebe übertragenden Kupplung
beschrieben, die nach einer nicht näher ausgeführten Strategie zusätzlich eingesetzt werden sollen.

Aufgabe der Erfindung ist es, ein Verfahren der gattungsgemäßen Art anzugeben, mit dem eine Wirkungsgrad günstige und verschleißoptimierte Schlupfregelung erzielbar ist.

Diese Aufgabe wird erfindungsgemäß mit den kennzeichnenden Merkmalen des Patentanspruches 1 gelöst. Vorteilhafte und zweckmäßige Weiterbildungen der Erfindung sind den weiteren Patentansprüchen entnehmbar.

Erfindungsgemäß soll in definierten Übersetzungsbereichen des Getriebes, die bevorzugt die Anfahrübersetzung und/oder die Endübersetzung des Variators im Getriebe betreffen, die Schlupfregelung durch Anpressdrucksteuerung der Kupplung durchgeführt werden, während in den dazwischen liegenden Übersetzungsbereichen die Schlupfregelung am Übertragungsmittel durch entsprechende Vorspannungssteuerung geregelt wird. Das jeweils nicht geregelte Übertragungsmittel (Kupplung oder Umschlingungsmittel) wird durch adaptive Druckanhebung in einem stabilen, schlupffreien Zustand gehalten.

Erfindungsgemäß wurde erkannt, dass eine Schlupfregelung des Getriebes bzw. des Übertragungsmittels im Anfahrbereich und/oder im Endbereich der durchfahrbaren stufenlosen Übersetzung durch Anpressdrucksteuerung der Kupplung vorteilhafter ist, weil dadurch unzulässiger Verschleiß an dem Übertragungsmittel zuverlässig vermeidbar ist, während in den dazwischen liegenden, im Fahrbetrieb zumeist anliegenden Übersetzungsbereichen unter Bevorrangung des Wirkungsgrades des stufenlosen Getriebes eine Vorspannungssteuerung des Übertragungsmittels durchgeführt wird.

Die Übersetzungsbereiche können dabei bevorzugt variabel, z. B. mittels einer Kennfeldsteuerung, ausgelegt werden, um weiteren Antriebs- und Fahrzustands-Parametem Rechnung zu tragen. Beispielsweise können die Last (Gaspedalstellung) und das Drehmoment des Antriebsmotors und/oder die Getriebeöltemperatur und/oder Fahrzustände wie Anfahren am Berg, etc. durch Verschieben der Schwellwerte für die Umschaltung der Schlupfregelung entsprechend berücksichtigt werden.

Ein Ausführungsbeispiel der Erfindung ist im folgenden mit weiteren Einzelheiten näher beschrieben. Das in der Zeichnung dargestellte Diagramm zeigt den durchfahrbaren stufenlosen Übersetzungsbereich i eines Umschlingungsmittelgetriebes in einem Kraftfahrzeug, mit von dem Drehmoment T_{Mot} des Antriebsmotors abhängiger Umschaltung der Schlupfregelung.

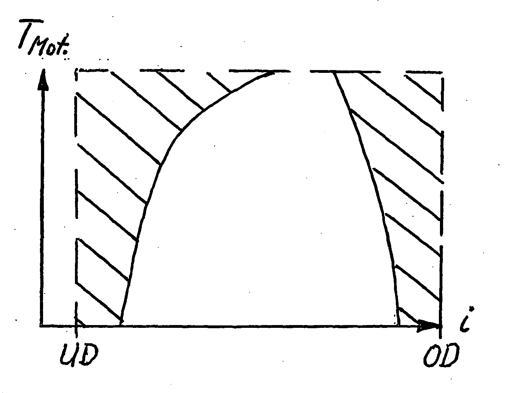

Zur Beschreibung des Ausführungsbeispieles wird ausgegangen von einem stufenlosen Umschlingungsgetriebe für Kraftfahrzeuge, wie es in der eingangs genannten DE 197 12 451 A1 anhand der Fig. 1 und 2 dargestellt ist.

Dabei erfolgt eine Schlupfregelung des Übertragungsmittels (im folgenden als Kette bezeichnet) durch Vorspannungssteuerung, in dem die beiden hydraulisch verstellbaren Scheibensätze des Umschlingungsgetriebes neben einer Primärdruckbeaufschlagung zur Verstellung der stufenlosen Übersetzung i einer überlagerten Sekundärdrucksteuerung unterliegen. Der Kettenschlupf wird durch Ermittlung über geeignete Sensoren der Scheibensatz-Drehzahlen, deren Übersetzungsstellung und der Ketten-Umlaufgeschwindigkeit berechnet, wobei zur Verminderung des Kettenschlupfes der Sekundärdruck erhöht und zur Erhöhung des Kettenschlupfes vermindert wird. Dadurch ist ein günstiger Getriebewirkungsgrad unter Vermeidung einer unnötig hohen Kettenvorspannung einregelbar. Die momentanen Vorspannungswerte werden ständig in entsprechenden Kennfeldern abgespeichert.

Gemäß der DE 197 12 451 A1 kann der berechnete Kettenschlupf auch durch Anpresskraftsteuerung einer hydraulisch beaufschlagten Lamellen-Reibungskupplung (oder einer ähnlichen Kupplung) beeinflusst werden, wobei an der Kupplung ebenfalls entsprechende Sensoren zur Erfassung z. B. deren Eingangsdrehzahl, deren Ausgangsdrehzahl, deren Temperatur und ggf. des Antriebsmomentes des Antriebsmotors zur Erfassung des Kupplungsschlupfes angeordnet sind.

So kann zur Verminderung des Kettenschlupfes der Kupplungsschlupf erhöht werden und umgekehrt.

Erfindungsgemäß ist die beschriebene Kettenschlupfregelung gemäß beiliegendem Diagramm ausgelegt, bei dem in der Abszisse die stufenlos einstellbare Übersetzung i und in der Ordinate das Antriebs-Drehmoment T_{Mot} des Verbrennungsmotors bzw. Antriebsmotors als Antriebs-Parameter dargestellt ist.

Die gestrichelt dargestellten Bereiche UD (Underdrive bzw. Anfahrbereich) und OD (Overdrive bzw. Endübersetzungsbereich) werden dabei mit Kupplungs-Anpressdrucksteuerung und die dazwischen liegenden Bereiche mit einem Mittelbereich 1:1 (die wirksamen Umschlingungsradien beider Scheibensätze sind dabei gleich) mit Vorspannungssteuerung der Kette betrieben. Das jeweils nicht geregelte Übertragungsmittel wird dabei durch eine Druckanhebung von ca. 5 bis 10 % des momentan anliegenden Druckes in einen stabilen schlupffreien Zustand gesteuert.

Damit ist sichergestellt, dass im Anfahrbereich UD und im Endübersetzungsbereich OD der Kettenschlupf feinfühlig und schnell über den Kupplungsschlupf geregelt wird. Somit kann der Verschleiß der jeweils an einem Scheibensatz über einen relativ kleinen wirksamen Umschlingungsradius laufenden Kette entscheidend reduziert werden. Die Druckanhebung des nicht geregelten Übertragungsmittels erfolgt adaptiv über entsprechende Kennfelder unter Berücksichtigung der aktuellen Anpressdrücke, der momentanen Fahrzustände, etc.

In den dazwischen liegenden Übersetzungsbereichen, die dem weit häufigerem Fahrbetrieb entsprechen, wird der Kettenschlupf nicht über die Kupplung, sondern nur durch die Vorspannungssteuerung der Kette über den vorbeschriebenen Sekundärdruck auf die hydraulisch verstellbaren Scheibensätze geregelt, so dass bei günstigem Getriebewirkungsgrad jeweils gerade die Vorspannung an der Kette anliegt, die zur Übertragung des momentanen Antriebsmomentes erforderlich ist Die Kupplung ist dabei schlupffrei gesteuert.

Die gestrichelt dargestellten Bereiche gemäß dem Diagramm können von Antriebs- und/oder Fahrzustands-Parametem abhängig z. B. durch Kennfeldsteuerung variabel ausgeführt sein. Im Ausführungsbeispiel ist als ein Parameter das Drehmoment T_{Mot} des Antriebsmotors dargestellt, wobei - wie ersichtlich - der gestrichelte Übersetzungsbereich bei niedrigerem Drehmoment des Antriebsmotors enger ist als bei hohem Antriebsmoment, und wobei im Bereich des höchsten Antriebsmomentes ggf. nur noch eine Schlupfregelung der Kupplung vorgegeben sein kann.

Weitere, die Übersetzungsbereiche beeinflussende Parameter können die Kupplungstemperatur, die Getriebeöltemperatur, Lastsignale des Antriebsmotors, Fahrbahnverhältnisse wie Steigungen, Gefälle etc. sein.

Anstelle des beschriebenen Umschlingungsmittelgetriebes mit beispielsweise einer Kette als Übertragungsmittel könnte auch ein Torroidgetriebe oder ein anderes stufenloses Getriebe mit einer Schlupfregelung verwendet sein.

## Patentansprüche

1. Verfahren zur Schlupfregelung eines Übertragungsmittels in einem stufenlosen Getriebe, insbesondere einem Umschlingungsmittelgetriebe in einem Kraftfahrzeug, bei dem mittels geeigneter Sensoren ein Schlupf der Übertragungsmittel erfasst und durch Vorspannungssteuerung geregelt wird und bei dem ferner der Kupplungsschlupf einer das Antriebsmoment zum Getriebe übertragenden Kupplung mittels geeigneter Sensoren erfasst und durch Kupplungs-Anpressdrucksteuerung geregelt wird, **dadurch gekennzeichnet, dass** in definierten Übersetzungsbereichen des Getriebes der Schlupf des Übertragungsmittels durch Vorspannungssteuerung und in den anderen Übersetzungsbereichen durch Anpressdrucksteuerung der Kupplung geregelt wird.

2. Verfahren nach Anspruch 1, **dadurch gekennzeichnet, dass** im unteren (Anfahr-) Übersetzungsbereich (UD) der Schlupf des Übertragungsmittels nur durch Anpressdrucksteuerung der Kupplung geregelt wird.

3. Verfahren nach Anspruch 1 oder 2, **dadurch gekennzeichnet, dass** im oberen Endübersetzungsbereich (OD) der Schlupf des Übertragungsmittels nur durch Anpressdrucksteuerung der Kupplung geregelt wird.

4. Verfahren nach einem der Ansprüche 1 bis 3, **dadurch gekennzeichnet, dass** das nichtgeregelte Übertragungsmittel durch entsprechende Druckanhebung in einem stabilen, schlupffreien Zustand gehalten wird.

5. Verfahren nach Anspruch 4, **dadurch gekennzeichnet, dass** die Druckanhebung adaptiv anhand von abgespeicherten und im Fahrbetrieb ständig aktualisierten Kennlinien erfolgt.

6. Verfahren nach einem oder mehreren der Ansprüche 1 bis 5, **dadurch gekennzeichnet, dass** die Übersetzungsbereiche abhängig von Antriebs- und/oder Fahrzustands-Parametem variabel vorgegeben werden.

## Claims

1. Process for slip-regulating a transmitting means in a continuously variable transmission, particularly a belt drive in a vehicle, in which the slip in the transmission means is recorded by sensors and is regulated by means of a pre-stressing control means and in which the slip in coupling that transmits the driving moment to the gearing is recorded by means of appropriate sensors and is regulated by means of coupling support pressure control means, **characterized in that** the slip of the transmission means is regulated by pre-stressing control means in certain transmission ranges of the gearing and, in other transmission ranges, is regulated by coupling support pressure control means.

2. Process in accordance with claim 1, **characterized in that**, in the lower (starting) transmission range, the slip in the transmission means is only regulated by the coupling support pressure control means.

3. Process in accordance with claims 1 or 2, **characterized in that**, in the upper, final transmission range, the slip in the transmission means is only regulated by means of the coupling support pressure control means.

4. Process in accordance with one of claims 1 to 3, **characterized in that** the non-regulated transmission means is kept in a stable, slip-free state by means of corresponding pressure boost.

5. Process in accordance with claim 4, **characterized in that** the pressure boost occurs adaptively in connection with stored characteristic curves that are continuously updated while the given vehicle is in use.

6. Process in accordance with one or more of claims 1 to 5, **characterized in that** the transmission ranges are set variably on the basis of drive and/or motion parameters.

## Revendications

1. Procédé de régulation du glissement d'un moyen de transmission dans une boîte à réglage continu, notamment d'un engrenage médian d'enroulement dans un véhicule automobile, pour lequel un glissement des moyens de transmission est détecté au moyen de capteurs appropriés et est régulé grâce à une commande de précontrainte et pour lequel le glissement d'un embrayage transmettant le couple d'entraînement à la boîte est de plus détecté au moyen de capteurs appropriés et est régulé par la commande de pression de serrage de l'embrayage, **caractérisé en ce que**, dans des zones de transmission définies de la boîte, le glissement du moyen de transmission est régulé par la commande de précontrainte et dans les autres zones de transmission par la commande de pression de serrage de l'embrayage.

2. Procédé selon la revendication 1, **caractérisé en ce que**, dans la zone de transmission (de démarrage) (UD) inférieure, le glissement du moyen de transmission n'est régulé que par la commande de pression de serrage de l'embrayage.

3. Procédé selon la revendication 1 ou 2, **caractérisé en ce que**, dans la zone de transmission finale (OD) supérieure, le glissement du moyen de transmission n'est régulé que par la commande de pression de serrage de l'embrayage.

4. Procédé selon l'une quelconque des revendications 1 à 3, **caractérisé en ce que** le moyen de transmission non régulé est maintenu dans un état stable, sans glissement par l'augmentation de la pression correspondante.

5. Procédé selon la revendication 4, **caractérisé en ce que** l'augmentation de la pression est effectuée de manière adaptive au moyen de courbes caractéristiques enregistrées et actualisées en permanence lorsque le véhicule roule.

6. Procédé selon l'une quelconque ou plusieurs des revendications 1 à 5, **caractérisé en ce que** les zones de transmission sont prescrites de manière variable selon des paramètres d'entraînement et/ou d'état de marche.
